# FASCICULE DE BREVET EUROPEEN

(11) **EP 3 071 748 B1**
(45) Date de publication et mention de la délivrance du brevet: **17.04.2019**
(21) Numéro de dépôt: 14800083.9
(22) Date de dépôt: 21.11.2014
(51) Int. Cl.: D07B 1/06, D07B 1/16, C22C 38/02, C22C 38/04, C22C 38/18, C22C 38/22, C22C 38/24, C22C 38/30, C22C 38/32, C22C 38/40

(54) **FIL D'ACIER À HAUTE TRÉFILABILITÉ COMPRENANT UN TAUX DE CARBONE EN MASSE COMPRIS ENTRE 0,05 % INCLU ET 0,4 % EXCLU**
STAHLDRAHT MIT HOHER ZIEHBARKEIT UND EINEM KOHLENSTOFFMASSEGEHALT ZWISCHEN EINSCHLIESSLICH 0,05% UND AUSSCHLIESSLICH 0,4%
STEEL WIRE WITH HIGH DRAWABILITY HAVING A CARBON LEVEL BY MASS OF BETWEEN 0.05% INCLUSIVE AND 0.4% EXCLUSIVE

(30) Priorité: 22.11.2013 FR 1361536
(43) Date de publication de la demande: 28.09.2016
(73) Titulaire: Compagnie Générale des Etablissements Michelin, 63000 Clermont-Ferrand (FR)
(72) Inventeur: VERLEENE, Arnaud, F-63040 Clermont-Ferrand Cedex 9 (FR)
(74) Mandataire: Desbordes, Guillaume
(86) Numéro de dépôt international: PCT/EP2014/075221
(87) Numéro de publication internationale: WO 2015/075161

(56) Documents cités:
- EP-A1- 0 953 651
- EP-A1- 0 976 541
- WO-A1-97/26379
- WO-A1-2005/113887
- WO-A1-2009/109495

## Description

L'invention concerne un fil en acier, notamment pour pneumatique.

Un pneumatique à armature de carcasse, par exemple radiale, comprend une bande de roulement, deux bourrelets inextensibles, deux flancs reliant les bourrelets à la bande de roulement et une armature de sommet, disposée circonférentiellement entre l'armature de carcasse et la bande de roulement.

L'armature de sommet et/ou de carcasse comprend une ou plusieurs nappes de caoutchouc, éventuellement renforcées par des éléments de renforcement ou renforts tels que des fils unitaires métalliques ou des câbles métalliques provenant de l'assemblage de plusieurs fils unitaires métalliques. Les renforts métalliques sont en acier.

L'armature de sommet est généralement constituée d'au moins deux nappes de sommet superposées, dites parfois nappes "de travail" ou nappes "croisées", dont les câbles de renforcement, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Les nappes croisées peuvent être complétées par diverses autres nappes ou couches de caoutchouc auxiliaires, de largeurs variables selon les cas, comportant ou non des renforts. On citera à titre d'exemple de simples coussins de gomme, des nappes dites "de protection" chargées de protéger le reste de l'armature de sommet des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Toutefois, ces renforts métalliques contribuent de façon significative à la masse du pneumatique que l'on souhaite alléger le plus possible, en améliorant, si possible, leur résistance mécanique. Des exemples de ces renforts métalliques sont décrits dans WO 2005/113887

Il est alors préconisé d'augmenter le taux en masse d'éléments de l'acier, par exemple de carbone, à hauteur de 0,9 %, voire plus, ce qui permet d'augmenter la résistance mécanique des fils, donc d'en réduire le diamètre et/ou la densité dans les nappes de renfort, et ainsi d'alléger le pneumatique. On obtient un pneumatique allégé mais présentant une endurance relativement modeste. En effet, les renforts métalliques sont plus sensibles à la fatigue et à la corrosion du fait de l'utilisation de taux de carbone en masse relativement élevé.

D'autres fils métalliques, par exemple en acier inoxydable, sont notamment décrits dans EP 0 953 651.

L'invention a pour but un renfort métallique moins sensible à la fatigue et à la corrosion.

A cet effet, l'invention a pour objet un fil d'acier, l'acier étant tel que défini dans la norme NF EN10020, de diamètre d exprimé en mm, présentant une microstructure intégralement ferritique, perlitique ou ferrito-perlitique et un taux de carbone en masse C tel que 0,05 % ≤ C < 0,4 %, un taux de chrome en masse Cr tel que Cr < 12 % et une contrainte maximale avant rupture R, exprimée en MPa, telle que R ≥ 175 + 930.C - 600.ln(d) et R ≥ 1500 MPa.

D'une part, le fil selon l'invention présente un taux de carbone C en masse relativement faible. Ainsi, même si sa contrainte maximale avant rupture peut être dans certains cas inférieure à celle de fils de l'état de la technique présentant un taux de carbone C en masse plus élevé, le fil selon l'invention est beaucoup moins sensible à la fatigue et à la corrosion ce qui améliore l'endurance du pneumatique et compense son déficit initial en contrainte maximale avant rupture.

D'autre part, le taux de carbone en masse étant relativement faible, on améliore la tréfilabilité du fil, c'est-à-dire la possibilité d'écrouir suffisamment le fil par tréfilage pour lui conférer des propriétés de résistance mécaniques nouvelles et inventives, notamment une contrainte maximale avant rupture élevée.

Ainsi, on peut réduire le diamètre du fil, et donc alléger le pneumatique, tout en conservant une résistance mécanique suffisante pour renforcer le pneumatique.

En outre, le coût de revient industriel du fil selon l'invention est relativement faible, notamment comparé à celui d'un fil en acier inoxydable. De plus, l'utilisation d'un faible taux de chrome Cr permet d'obtenir un fil présentant des avantages en termes de contraintes liées à l'environnement. En effet, l'utilisation de chrome nécessite l'emploi de mesures spécifiques coûteuses, notamment lors du recyclage des tels fils, ce qui peut être évité grâce au fil selon l'invention.

La contrainte maximale à la rupture ou limite de rupture correspond à la force nécessaire pour faire rompre le fil. Les mesures de contrainte maximale avant rupture notée R (en MPa) sont effectuées selon la norme ISO 6892 de 1984.

La micro-structure de l'acier est intégralement de la ferrite, de la perlite ou un mélange de ces microstructures.

Ainsi, la micro-structure de l'acier est dépourvue de martensite et/ou de bainite. Une microstructure ferrito-martensitique entraine des décohésion entre les phases ferritique et martensitique ce qui n'est pas souhaitable. Une microstucture martensitique n'est pas suffisamment ductile pour permettre un tréfilage du fil qui casserait trop fréquemment.

On distingue une micro-structure ferritique, perlitique ou ferrito-perlitique d'une autre micro-structure, en particulier martensitique ou bainitique par observation métallographique. La micro-structure ferrito-perlitique présente des grains de ferrite ainsi que des zones perlitiques lamellaires. Au contraire, la micro-structure martensitique comprend des lattes et/ou des aiguilles que l'homme du métier saura distinguer des grains et des lamelles des micro-structures ferrito-perlitique et perlitique.

Plus préférentiellement, la microstructure de l'acier est intégralement ferrito-perlitique.

Le fil est en acier, c'est-à dire qu'il est constitué majoritairement (c'est-à-dire pour plus de 50% en masse) ou intégralement (pour 100% en masse) d'acier tel que défini dans la norme NF EN10020. Conformément à cette norme, un acier est un matériau contenant plus de fer que tout autre élément et dont la teneur en carbone est inférieure à 2% et qui contient d'autres éléments d'alliages. Toujours conformément à cette norme, l'acier comprend éventuellement d'autres éléments d'alliages.

De préférence l'acier est un acier non allié tel que défini dans la norme NF EN10020. Ainsi, l'acier comprend, en plus du carbone et du fer, d'autres éléments alliages connus dans des quantités conformes à la norme NF EN10020.

Dans un autre mode de réalisation, l'acier est un acier allié tel que défini dans la norme NF EN10020. Dans ce mode de réalisation, l'acier comprend, en plus du carbone et du fer, d'autres éléments alliages connus.

De préférence, l'acier n'est pas un acier inoxydable tel que défini dans la norme NF EN10020. Ainsi, dans ce mode de réalisation, l'acier comprend préférentiellement au plus 10,5% en masse de chrome.

Avantageusement, le fil présente un taux de carbone en masse C tel que 0,07 % ≤ C ≤ 0,3 %, de préférence 0,1 % ≤ C ≤ 0,3 % et plus préférentiellement 0,15% ≤ C ≤ 0,25%.

Avantageusement, R ≥ 350 + 930.C - 600.ln(d), de préférence R ≥ 500 + 930.C - 600.ln(d), plus préférentiellement R ≥ 700 + 930.C - 600.ln(d).

Un tel fil présente alors une contrainte maximale à la rupture R améliorée.

Avantageusement, d est supérieur ou égal à 0,10 mm et de préférence à 0,12 mm.

Lorsque le diamètre d est trop petit, le coût de revient industriel du fil devient trop important et incompatible avec une production de masse.

Dans certains modes de réalisation, d > 0,15 mm et R ≥ 1800 MPa et de préférence d > 0,15 mm et R ≥ 1900 MPa.

Avantageusement, d est inférieur ou égal à 0,40 mm, de préférence à 0,25 mm, plus préférentiellement à 0,23 mm et encore plus préférentiellement à 0,20 mm.

Lorsque le diamètre d est trop grand, la flexibilité et l'endurance du fil sont trop faibles pour une utilisation du fil dans certaines nappes du pneumatique, notamment l'armature de carcasse, par exemple pour véhicule de type poids lourd.

Dans certains modes de réalisation, d ≤ 0,15 mm et R ≥ 2000 MPa et de préférence d ≤ 0,15 mm et R ≥ 2100 MPa.

De façon optionnelle, la micro-structure de l'acier est choisie parmi la ferrite, la perlite et les mélanges de ces microstructures. On distingue une micro-structure ferrito-perlitique ou perlitique d'une autre micro-structure, en particulier martensitique par observation métallographique. La micro-structure ferrito-perlitique présente des grains de ferrite ainsi que des zones perlitiques lamellaires. Au contraire, la micro-structure martensitique comprend des lattes et/ou des aiguilles que l'homme du métier saura distinguer des grains et des lamelles des micro-structures ferrito-perlitique et perlitique.

Un autre objet de l'invention est un câble comprenant plusieurs fils tels que définis ci-dessus.

Par exemple, les câbles sont du type à couches ou du type à torons.

On rappelle qu'il existe deux techniques possibles d'assemblage de fils ou de torons:
- soit par câblage: dans un tel cas, les fils ou torons ne subissent pas de torsion autour de leur propre axe, en raison d'une rotation synchrone avant et après le point d'assemblage ;
- (soit par retordage : dans un tel cas, les fils ou torons subissent à la fois une torsion collective et une torsion individuelle autour de leur propre axe, ce qui génère un couple de détorsion sur chacun des fils ou torons.

L'invention a également pour objet un élément semi-fini, comprenant une matrice en caoutchouc dans lequel est noyé au moins un fil tel que défini ci-dessus.

La matrice en caoutchouc comprend au moins un élastomère diénique, une charge renforçante, un système de vulcanisation et divers additifs.

Par élastomère diénique de la matrice en caoutchouc, on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". De manière particulièrement préférentielle, l'élastomère diénique de la matrice en caoutchouc est choisi dans le groupe des élastomères diéniques (essentiellement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La matrice en caoutchouc peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

A titre de charge renforçante, on utilise préférentiellement du noir de carbone ou une charge inorganique. Plus particulièrement, comme noirs de carbone conviennent tous les noirs de carbone, notamment les noirs du type HAF, ISAF, SAF, conventionnellement utilisés dans les pneumatiques. A titre d'exemples non limitatifs de tels noirs, on peut citer les noirs N115, N134, N234, N330, N339, N347, N375. Cependant le noir de carbone peut bien entendu être utilisé en coupage avec des charges renforçante et en particulier d'autres charges inorganiques. De telles charges inorganiques comprennent de la silice, notamment des silices hautement dispersibles, par exemple les silices Ultrasil 7000 et Ultrasil 7005 de la société Degussa.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

A la charge renforçante peuvent être également ajoutés, selon l'application visée, des charges inertes (non renforçantes) telles que particules d'argile, bentonite, talc, craie, kaolin, utilisables par exemple dans des flancs ou des bandes de roulement de pneumatiques colorés.

La matrice en caoutchouc peut comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novalaque) ou des donneurs de méthylène (par exemple HMT ou H3M) tels que décrits par exemple dans la demande WO 02/10269 (ou US2003-0212185).

La matrice en caoutchouc comprend également un système de vulcanisation à base soit de soufre, soit de donneurs de soufre et/ou de peroxyde et/ou de bismaléimides, des accélérateurs de vulcanisation, des activateurs de vulcanisation.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2-mercaptobenzothiazyle (MBTS), N-cyclohexyl-2-benzothiazyle sulfénamide (CBS), N,N-dicyclohexyl-2-benzothiazyle sulfénamide (DCBS), N-ter-butyl-2-benzothiazyle sulfénamide (TBBS), N-ter-butyl-2-benzothiazyle sulfénimide (TBSI) et les mélanges de ces composés.

L'invention a pour autre objet un pneumatique comprenant au moins un fil tel que défini ci-dessus.

De préférence, le pneumatique est destiné à des véhicules de tourisme, des véhicule industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. Plus préférentiellement, le pneumatique est destiné à des véhicules lourds, engins agricoles ou de génie civil, aéronef, autres véhicules de transport ou de manutention.

De préférence, le fil est destiné à renforcer une armature de sommet et/ou de carcasse de pneumatique. Plus préférentiellement, le fil est destiné à renforcer une armature de carcasse de pneumatique.

De préférence, le pneumatique est pour un véhicule de type poids-lourd comprenant une armature de carcasse comprenant au moins un fil tel que décrit ci-dessus.

L'invention sera mieux comprise à la lecture de la description qui va suivre, donnée uniquement à titre d'exemple non limitatif et faite en se référant aux dessins dans lesquels :
- la figure 1 une vue en coupe perpendiculaire à la direction circonférentielle d'un pneumatique selon l'invention;
- la figure 2 est un diagramme illustrant des étapes d'un procédé de tréfilage permettant d'obtenir le fil selon l'invention ;
- la figure 3 est une vue au microscope optique d'une micro-structure ferrito-perlitique ;
- la figure 4 est une vue au microscope électronique à balayage d'une micro-structure ferrito-perlitique ; et
- la figure 5 est une vue au microscope optique d'une micro-structure ferritique aciculaire (dite de Windmanstätten).

### EXEMPLES DE PNEUMATIQUES SELON L'INVENTION

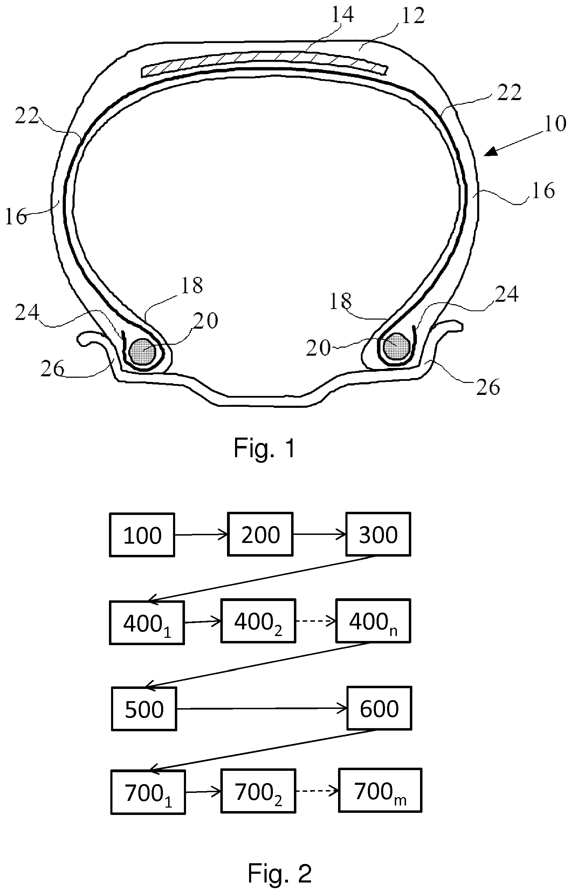

On a représenté sur la figure 1 un pneumatique selon l'invention et désigné par la référence générale 10.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 10 qui est ici représenté monté sur une jante 26.

L'armature de carcasse 22 est de manière connue en soi constituée d'au moins une nappe renforcée par des fils ou des câbles conformes à l'invention. Ces fils ou câbles de l'armature de carcasse sont dits "radiaux", c'est-à-dire que ces fils ou câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 18 et passe par le milieu de l'armature de sommet 14).

L'armature de sommet 14 comporte au moins une nappe renforcée par des fils ou des câbles conformes à l'invention. Dans cette armature de sommet 14 schématisée de manière très simple sur la figure 1, on comprendra que les fils ou câbles de l'invention peuvent par exemple renforcer tout ou partie des nappes sommet de travail, ou des nappes (ou demi-nappes) sommet de triangulation et/ou des nappes sommet de protection, lorsque de telles nappes sommet de triangulation ou de protection sont utilisées. Outre les nappes de travail, celles de triangulation et/ou de protection, l'armature de sommet 14 du pneumatique de l'invention peut bien entendu comporter d'autres nappes sommet, par exemple une ou plusieurs nappes sommet de frettage.

Bien entendu, le pneumatique 10 comporte en outre de manière connue une couche de gomme ou élastomère intérieure (communément appelée "gomme intérieure") qui définit la face radialement interne du pneumatique et qui est destinée à protéger l'armature de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renfort qui est située entre l'armature de carcasse et la couche intérieure, destinée à renforcer la couche intérieure et, par conséquent, l'armature de carcasse, également destinée à délocaliser partiellement les efforts subis par l'armature de carcasse.

Le pneumatique est fabriqué par assemblage des différents éléments décrits ci-dessus présents sous forme d'éléments semi-finis comprenant une matrice de caoutchouc dans laquelle sont noyés les fils ou les câbles conformes à l'invention.

### EXEMPLES DE CABLES SELON L'INVENTION

Dans le cas où l'armature de sommet et/ou de carcasse est renforcée par des câbles, ceux-ci sont fabriqués par assemblage de plusieurs fils d'acier conformes à l'invention, soit par câblage, soit par retordage.

Dans le cas d'un pneumatique pour des véhicules industriels choisis parmi des camionnettes, des véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention, l'armature de sommet et/ou de carcasse est renforcée par des câbles conformes à l'invention notamment choisis parmi les câbles à couches de structure 1+3+8, 1+6+11, 1+6+12, 2+7, 3+8, 3+9, 3+9+15 et les câbles à torons de structure 3 x (1+5), (1+6) x (3+8), (1+6) x (3+9+15), (1+6) x (4+10+16). D'autres câbles pouvant renforcer l'armature de sommet et/ou de carcasse sont également décrits dans le document WO 2010/139583.

Dans le cas d'un pneumatique pour des véhicules de tourisme, l'armature de sommet et/ou de carcasse est renforcée par des câbles conformes à l'invention et notamment choisis parmi les câbles de structure 2+1, 2+2, 2+4 et 4x3.

Les câbles conformes à l'invention peuvent être gommés *in situ,* comme cela est décrit, entre autres, dans le document WO 2010/139583.

L'armature de sommet et/ou de carcasse peut également être renforcée par un ou plusieurs fils unitaires conformes à l'invention mais non assemblés.

### EXEMPLES DE FILS SELON L'INVENTION

Le fil est en acier. De préférence, l'acier est un acier non allié tel que défini dans la norme NF EN10020. Des fils en acier allié tels que définis dans la norme NF EN10020 sont également envisageables.

L'acier utilisé comprend un taux de chrome en masse Cr tel que Cr < 12 %, de préférence tel que défini dans la norme NF EN10020, c'est-à-dire au plus égal à 10,5%, plus préférentiellement Cr ≤ 5% et encore plus préférentiellement tel que Cr ≤ 1%, et idéalement préférentiellement tel que Cr ≤ 0,2%, et ici Cr=0,039%.

L'acier utilisé peut donc comprendre préférentiellement des éléments d'alliages connus tels que par exemple Mn, Si, P, S, N, V, Cr, Mo, Ni, B et Co (voir par exemple Research Disclosure 34984 - "Micro-alloyed steel cord constructions for tyres" - mai 1993 ; Research Disclosure 34054 - "High tensile strength steel cord constructions for tyres" - août 1992) permettant d'adapter l'acier.

L'acier préférentiel non allié conforme à la norme NF EN10020 comprend au plus 1,65% en masse et plus préférentiellement entre 0,3 et 0,7 % en masse de manganèse, ici 0,583%.

L'acier préférentiel non allié conforme à la norme NF EN10020 comprend au plus 0,60% en masse et plus préférentiellement entre 0,1 et 0,3 % en masse de silicium, ici 0,161%.

L'acier préférentiel non allié conforme à la norme NF EN10020 comprend au plus 0,10% en masse et plus préférentiellement au plus 0,045 % en masse de phosphore, ici 0,0085%.

L'acier préférentiel non allié conforme à la norme NF EN10020 comprend au plus 0,10% en masse et plus préférentiellement au plus 0,045 % en masse de soufre, ici 0,0151%.

L'acier préférentiel non allié conforme à la norme NF EN10020 comprend au plus 0,10% en masse et plus préférentiellement au plus 0,008 % en masse d'azote, ici 0,0029%.

L'acier préférentiel non allié conforme à la norme NF EN10020 comprend au plus 0,10% en masse et plus préférentiellement au plus 0,05 % en masse et encore plus préférentiellement 0,02% de vanadium, ici 0 %.

Les valeurs des taux en masse des éléments décrits ci-dessus peuvent être mesurés selon la norme FD CEN/TR 10261 intitulée « Aciers et fontes - Normes européennes pour la détermination de la composition chimique ».

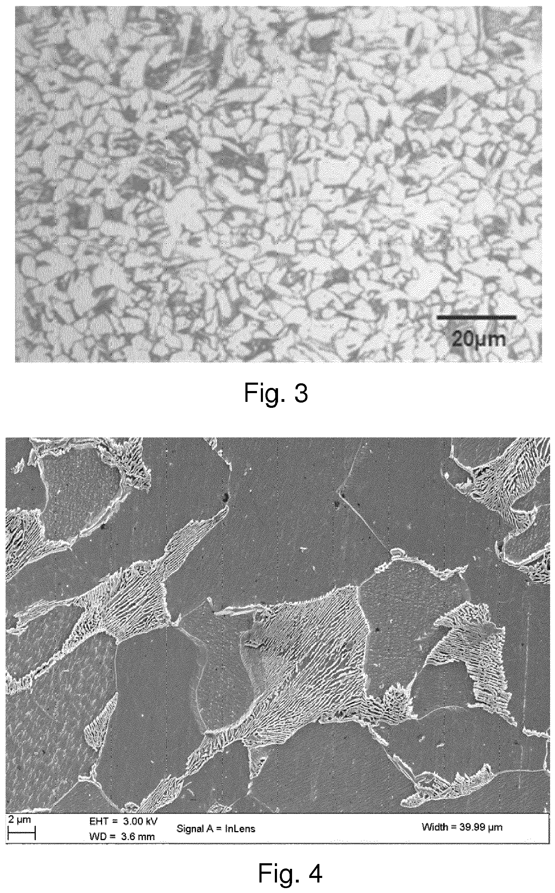

La microstructure de l'acier est choisie parmi la ferrite, la perlite et les mélanges de ces microstructures. Le fil est préférentiellement en acier ferrito-perlitique, illustré sur les figures 3 et 4. L'acier utilisé comprend un taux de carbone C, exprimé en %, en masse d'acier tel que 0,05% ≤ C < 0,4 %, de préférence 0,07 % ≤ C ≤ 0,3 %, plus préférentiellement 0,1 % ≤ C ≤ 0,3 % et encore plus préférentiellement 0,15% ≤ C ≤0,25%.

Le fil peut être revêtu d'une couche métallique améliorant par exemple les propriétés de mise en oeuvre du fil, ou les propriétés d'usage du fil, du câble et/ou du pneumatique eux-mêmes, telles que les propriétés d'adhésion, de résistance à la corrosion ou encore de résistance au vieillissement. De préférence, le fil est revêtu d'une couche de laiton (alliage Cu-Zn) ou de zinc. En variante, le fil peut être dépourvu de revêtement métallique.

On a rassemblé dans le tableau 1 ci-dessous des fils EDT1, EDT2 selon l'état de la technique et F1, F2, F3, F4 selon l'invention.

Les fils des exemples du tableau 1 présentent un diamètre d supérieur ou égal à 0,10 mm et de préférence à 0,12 mm. En outre, les fils des exemples du tableau 1 présentent un diamètre d inférieur ou égal à 0,40 mm, de préférence à 0,25 mm, plus préférentiellement à 0,23 mm et encore plus préférentiellement à 0,20 mm.

**Tableau 1**

| | **EDT 1** | **EDT 2** | **F1** | **F2** | **F3** | **F4** |
|---|---|---|---|---|---|---|
| **C(%)** | 0,71 | 0,585 | 0,21 | 0,21 | 0,21 | 0,21 |
| **d (mm)** | 0,18 | 0,18 | 0,18 | 0,18 | 0,15 | 0,12 |
| **R (MPa)** | 2820 | 2903 | 1960 | 2088 | 2169 | 2307 |

Les fils F1 à F4 selon l'invention sont tels que la contrainte maximale avant rupture R du fil, exprimée en MPa, est telle que R ≥ A + 930.C - 600.ln(d) avec A=175 et d exprimé en mm.

On notera que les fils F1 à F4 sont tels que A=350, de préférence A=500 et plus préférentiellement A=700.

On notera que les fils F1 à F4 selon l'invention sont tels que R ≥ 1500 MPa. Les fils F1 et F2 sont tels que R ≥ 1800 MPa et de préférence R ≥ 1900 MPa. Les fils F3 et F4 sont tels que R ≥ 2000 MPa et de préférence R ≥ 2100 MPa.

### EXEMPLES DE PROCEDE DE TREFILAGE DU FIL SELON L'INVENTION

On a représenté sur la figure 2 un diagramme d'un procédé permettant de tréfiler les fils selon l'invention.

Dans une étape 100 de déroulage, on déroule un fil d'acier de diamètre initial D≥4, de préférence D≥5, ici égal à 5,5 mm et présentant une contrainte maximale à la rupture comprise entre 300 MPa et 700 MPa, en l'espèce R=525 MPa. Le fil, appelé fil machine est stocké sous forme d'une botte sur un dévidoir à partir duquel on le déroule grâce à des moyens automatisés de déroulage, par exemple un dérouleur. La micro-structure de l'acier est alors ferrito-perlitique.

Dans une étape 200 de décalaminage du fil machine, on fait passer le fil machine dans plusieurs poulies successives et dans deux dresseurs formés chacun par plusieurs poulies, les poulies de chaque dresseur étant montées en rotation selon un axe perpendiculaire à l'axe de rotation des poulies de l'autre dresseur. On enlève ainsi une couche d'oxydes de fer, appelé calamine, présente en surface du fil machine.

Dans une étape 300, on revêt le fil machine d'une couche d'un promoteur d'adhésion d'un lubrifiant de tréfilage.

Les étapes 400₁ à 400ₙ ont pour but de réduire le diamètre du fil du diamètre initial D vers un diamètre intermédiaire d', par exemple supérieur ou égal à 1 mm et de préférence à 1,3 mm et par exemple inférieur ou égal à 2,5 mm, de préférence à 2, 2 et plus préférentiellement à 2 mm.

Les étapes 400₁ à 400ₙ (n variant de 6 à 12) forment une série ininterrompue d'étapes de tréfilage en milieu sec du fil du diamètre initial D vers le diamètre intermédiaire d'. Chaque étape 400₁ à 400ₙ est une étape de tréfilage en milieu sec dans laquelle on fait passer le fil dans une filière de diamètre inférieur au diamètre du fil en amont de la filière. Ainsi, le fil présente un diamètre en aval de la filière inférieur au diamètre en amont de la filière. Le diamètre de chaque filière est inférieur au diamètre de la filière située en amont. Pour la série ininterrompue d'étapes de tréfilage en milieu sec du fil du diamètre initial D vers le diamètre intermédiaire d', on définit la déformation rationnelle ε=2.In(D/d').

Des moyens de traction du fil positionnés en aval de chaque filière, ici des cabestans, permettent d'exercer une force de traction suffisante pour tirer le fil à travers chaque filière. On utilise un lubrifiant de tréfilage sous forme pulvérulente.

Par tréfilage en milieu sec, on comprend que le fil circule dans un milieu gazeux, par exemple l'air ambiant. De préférence, le lubrifiant de tréfilage lors d'un tréfilage en milieu sec est sous forme pulvérulente. Lors d'un tréfilage en milieu sec, les moyens de tractions, par exemple des cabestants, sont exposés au milieu gazeux, par exemple l'air ambiant.

Par série ininterrompue d'étapes de tréfilage, on entend que le fil effectue une série de passages successifs dans plusieurs filières de tréfilage, chaque passage dans chaque filière de tréfilage correspondant à une étape de tréfilage. Mis à part le dernier passage, chaque passage dans une filière est suivi directement par un passage dans la filière qui lui succède. Dans une série ininterrompue d'étapes de tréfilage, le fil ne subit aucune étape, en particulier de traitement thermique ou de revêtement, autre qu'une étape de tréfilage entre deux étapes de tréfilage de la série. En d'autres termes, le fil ne subit aucune étape, en particulier de traitement thermique ou de revêtement, entre deux étapes directement successives de tréfilage de la série.

Dans une étape 500 de traitement thermique, on modifie la structure métallographique du fil de diamètre intermédiaire d' pour régénérer la structure du fil machine. L'homme du métier sait comment trouver les différents paramètres de cette étape, par exemple dans « Les principes de base du traitement thermique des aciers », André Constant et Guy Henry, ISBN 2-85330-083-8.

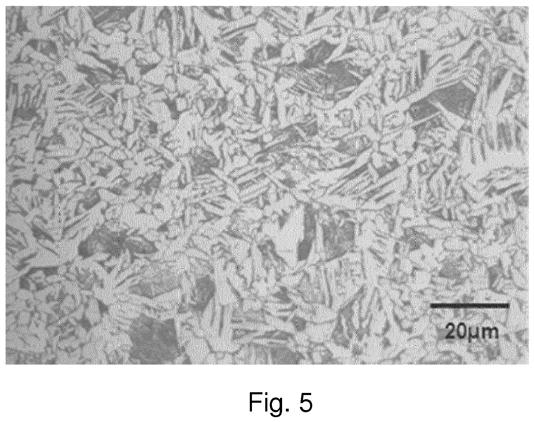

Lors de cette étape 500, on chauffe le fil de diamètre intermédiaire d' à une température supérieure ou égale à la température d'austénisation de l'acier, ici supérieure ou égale à 850°C. En fonction de la composition chimique de l'acier, l'homme du métier sait, notamment comme décrit dans « Précis de métallurgie », ISBN 2-12-260121-6, quelle température d'austénitisation il doit atteindre. Ainsi, si l'austénisation n'est pas suffisante, il subsiste des bandes non recristallisées et l'austénite obtenue n'est pas homogène ce qui nuit au tréfilage ultérieur. Si l'austénisation est trop importante, la micro-structure obtenue lors refroidissement ultérieur est une ferrite aciculaire (dite de Windmanstätten), illustrée sur la figure 5, et pas une structure ferrito-perlitique.

Puis on refroidit le fil de diamètre intermédiaire d' de façon à conférer à l'acier une micro-structure perlitique ou ferrito-perlitique. De façon bien connue de l'homme du métier, on refroidit le fil pour éviter la formation de microstructure autre qu'une structure perlitique, ferritique ou ferrito-perlitique. Une vitesse de refroidissement trop rapide conduirait à une micro-structure ferritique aciculaire, bainitique ou martensitique. L'homme du métier sait déterminer la vitesse de refroidissement en fonction de la composition chimique de l'acier, de la température d'austénitisation au moyen d'abaques disponibles notamment dans le document "Atlas des courbes de transformation des aciers de fabrication française", IRDIS, 1974.

Dans une étape 600, on revêt le fil de diamètre intermédiaire d' d'au moins une couche métallique, ici une couche de laiton.

Les étapes 700₁ à 700ₘ (m variant par exemple de 8 à 23) ont pour but de réduire le diamètre du fil du diamètre intermédiaire d' vers le diamètre final d et d'augmenter la contrainte maximale à rupture du fil.

Les étapes 700₁ à 700ₘ forment une série ininterrompue d'étapes de tréfilage en milieu humide du fil du diamètre intermédiaire d' vers le diamètre final d. Chaque étape 700₁ à 700ₘ est une étape de tréfilage en milieu humide dans laquelle on fait passer le fil dans une filière de diamètre inférieur au diamètre du fil en amont de la filière. Ainsi, le fil présente un diamètre en aval de la filière inférieur au diamètre en amont de la filière. Le diamètre de chaque filière est inférieur au diamètre de la filière située en amont. Pour la série ininterrompue d'étapes de tréfilage en milieu humide du fil du diamètre intermédiaire d' vers le diamètre final d, on définit la déformation rationnelle ε'=2.In(d'/d).

En variante, on réalisera les étapes 700₁ à 700ₘ en milieu sec.

Des moyens de traction du fil positionnés en aval de chaque filière, ici des cabestans à étages, permettent d'exercer une force de traction suffisante pour tirer le fil à travers chaque filière. Les moyens de tractions et les filières sont immergés dans un bain liquide de lubrifiant de tréfilage, par exemple tel que décrit dans le document WO 2008/113481.

Par tréfilage en milieu humide, on comprend que le fil circule dans un milieu liquide, par exemple une solution aqueuse. De préférence, le lubrifiant de tréfilage lors d'un tréfilage en milieu humide est sous forme liquide. Lors d'un tréfilage en milieu humide, les moyens de tractions, par exemple des cabestans, sont exposés au milieu liquide, par exemple la solution aqueuse.

Par série ininterrompue d'étapes de tréfilage, on entend que le fil effectue une série de passages successifs dans plusieurs filières de tréfilage, chaque passage dans chaque filière de tréfilage correspondant à une étape de tréfilage. Mis à part le dernier passage, chaque passage dans une filière est suivi directement par un passage dans la filière qui lui succède. Dans une série ininterrompue d'étapes de tréfilage, le fil ne subit aucune étape, en particulier de traitement thermique ou de revêtement, autre qu'une étape de tréfilage entre deux étapes de tréfilage de la série. En d'autres termes, le fil ne subit aucune étape, en particulier de traitement thermique ou de revêtement, entre deux étapes directement successives de tréfilage de la série.

Le procédé de tréfilage comprend ainsi N séries ininterrompues d'étapes de tréfilage, par exemple une en milieu sec et une en milieu humide. Ici N=2. Ainsi, on peut définir la déformation rationnelle totale pour le procédé de tréfilage εT=2.ln(D/d).

Le procédé de tréfilage comprend M étape(s) de traitement thermique visant à régénérer la structure du fil machine. Ici M=1 ce qui permet de réduire le coût de revient industriel du fil de diamètre d.

Le fil selon l'invention est susceptible d'être obtenu par le procédé décrit ci-dessus.

On a rassemblé dans le tableau 2 différentes valeurs des caractéristiques des fils selon l'invention et de l'état de la technique.

**Tableau 2**

| | **EDT1** | **EDT2** | **F1** | **F2** | **F3** | **F4** |
|---|---|---|---|---|---|---|
| **C (%)** | 0,71 | 0,585 | 0,21 | 0,21 | 0,21 | 0,21 |
| **d' (mm)** | 1 | 1,3 | 1,55 | 1,75 | 1,55 | 1,5 |
| **d (mm)** | 0,18 | 0,18 | 0,18 | 0,18 | 0,15 | 0,12 |
| **ε** | 2,6 | 2,8 | 2,5 | 2,3 | 2,5 | 2,6 |
| **ε'** | 3,6 | 4 | 4,3 | 4,5 | 4,7 | 5,1 |
| **εT** | 6,2 | 6,8 | 6,8 | 6,8 | 7,2 | 7,7 |

On notera que la déformation rationnelle ε'=2.In (d'/d) est telle que 4 < ε' ≤ 6 pour les fils F1 à F4. On notera que la déformation rationnelle ε=2.In (D/d') est telle que 2 ≤ ε ≤ 3 pour les fils F1 à F4. On notera que la déformation rationnelle εT=2.ln (D/d) est telle que 6 ≤ εT ≤ 8 pour les fils F1 à F4.

On notera que, pour les fils F1 à F4, ε ≤ 3, de préférence ε ≤ 2,75. On notera que, pour les fils F1 à F3, on a plus préférentiellement ε ≤ 2,5. On notera également que, pour les fils F1 à F4, εT ≥ 6,5 et de préférence εT ≥ 6,75. Pour le fil F3, on a plus préférentiellement εT ≥ 7,2. Pour le fil F4, on a encore plus préférentiellement εT ≥ 7,5. En outre, on notera que, contrairement au fils EDT1 et EDT2, on a ε' > 4. Pour le fil F1, on a ε' ≥ 4,3. Pour les fils F2 à F4, on a, de préférence, ε' ≥ 4,5. Plus préférentiellement, pour le fil F4, on a ε' ≥ 5.

### TESTS ET ESSAIS COMPARATIFS

On a comparé les fils de l'état de la technique et les fils F1, F2 au cours d'un test de flexion rotative réalisé en atmosphère humide (au moins 60% d'humidité relative). Ce test permet de mesurer la contrainte maximale d'endurance en flexion rotative en milieu humide σ_{F}* de chaque fil testé. Au cours de ce test, on impose 10⁵ cycles au fil testé autour de son axe de révolution à une contrainte prédéterminée. Si le fil rompt, on recommence le test avec une contrainte moins élevée et si le fil ne rompt pas, on recommence le test avec une contrainte plus élevée. On détermine ainsi de proche en proche, par exemple, par la méthode dite de l'escalier, la valeur de σ_{F}*. On a rassemblé les résultats de ce test dans le tableau 3 ci-dessous.

**Tableau 3**

| | **EDT1** | **EDT2** | **F1** | **F2** |
|---|---|---|---|---|
| **C (%)** | 0,71 | 0,585 | 0,21 | 0,21 |
| **d (mm)** | 0,18 | 0,18 | 0,18 | 0,18 |
| **R (MPa)** | 2820 | 2903 | 1960 | 2088 |
| **σ_{F}* (MPa)** | < 500 | < 500 | 685 | 725 |

Les fils F1, F2 selon l'invention rompent à des contraintes significativement plus élevées que ceux de l'état de la technique, et ce en milieu humide, illustrant ainsi un des avantages de l'invention. Ainsi, même si la contrainte à rupture initiale des fils F1, F2 est nettement inférieure à celle des fils EDT1 et EDT2, l'endurance en fatigue-corrosion des fils F1, F2 est nettement supérieure à celle des fils EDT1 et EDT2.

On a également comparé des câbles C1, C2 fabriqués avec les fils de l'état de la technique EDT2 et des câbles CI1, CI2 fabriqués avec les fils F2.

On a testé un premier type de câble (C1 et C1I) présentant une structure (1+6+12)x0,18 au cours d'un test de traction ondulée. Ce test permet de mesurer la limite d'endurance de chaque câble testé. Au cours de ce test, on soumet chaque câble à une variation de tension entre deux extremums définissant une amplitude, et ce pendant un nombre de cycles prédéterminé, ici 10⁵ cycles. Si le câble rompt, on recommence le test avec une amplitude moins élevée et si le fil ne rompt pas, on recommence le test avec une amplitude plus élevée. On détermine ainsi de proche en proche, par exemple, par la méthode dite de l'escalier, la valeur de la limite d'endurance. On a réalisé ce test dans deux conditions différentes : sous atmosphère sèche (moins de 8% d'humidité relative) et sous atmosphère humide (plus de 60% d'humidité relative). Dans ces conditions (atmosphère sèche et humide sans stockage préalable), on test directement le câble. Pour ces conditions, on a ainsi pu déterminer la limite d'endurance T (atmosphère sèche sans stockage préalable) et T* (atmosphère humide sans stockage préalable). On a également calculé la déchéance D* de la limite d'endurance due à la présence de l'atmosphère humide (D*=(T-T*)/T). On a rassemblé les résultats dans le tableau 4 ci-dessous.

**Tableau 4**

| | **C1** | **CI1** |
|---|---|---|
| **C (%)** | 0,71 | 0,21 |
| **Structure du câble** | 19.18 | 19.18 |
| **Rm (MPa)** | 2716 | 2032 |
| **Fm (N)** | 1283 | 956 |
| **T (MPa)** | 811 | 650 |
| **T* (MPa)** | 525 | 640 |
| **D*** | -35% | -1,5% |

Le câble CI1 selon l'invention présente une déchéance significativement inférieure au câble C1 de l'état de la technique que ce soit en milieu sec et en milieu humide illustrant ainsi un des avantages de l'invention. Ainsi, même si la contrainte à rupture et la force à rupture du câble CI1 sont inférieures à celles du câble C1, l'endurance en fatigue-corrosion du câble CI1 est nettement supérieure à celle du câble C1.

On a testé un deuxième type de câble (C2 de l'état de la technique et CI2A et CI2B selon l'invention) présentant une structure 3x0,18 mm au cours d'un test de flexion rotative analogue à celui utilisé pour le test des fils précédent. On détermine ainsi les contraintes maximales d'endurance en flexion rotative en milieu sec σ_{C} et humide σ_{C}* de chaque câble testé. On a également calculé la déchéance Dσ_{c}* de contrainte maximale d'endurance en flexion rotative due à la présence de l'atmosphère humide (Dσ_{C}*=(σ_{C}- σ_{C}*)/σ_{C}). On a rassemblé les résultats dans le tableau 5 ci-dessous.

**Tableau 5**

| | **C2** | **CI2A** | **CI2B** |
|---|---|---|---|
| **C (%)** | 0,71 | 0,21 | 0,21 |
| **Structure du câble** | 3.18 | 3.18 | 3.18 |
| **Rm du câble (MPa)** | 2750 | 1932 | 2066 |
| **σ_{c} (MPa)** | 1250 | 825 | 935 |
| **σ_{c}*** (**MPa)** | 650 | 825 | 895 |
| **Dσ_{c}*** | -48 % | 0% | 4% |

Les câbles CI2A et CI2B selon l'invention présentent une déchéance significativement inférieure au câble C2 de l'état de la technique illustrant ainsi un des avantages de l'invention.

L'invention ne se limite pas aux modes de réalisation précédemment décrits.

En effet, l'étape 200 de décalaminage peut être réalisée par action d'un agent chimique, par exemple de l'acide.

De plus, lors de l'étape 600, il est possible de revêtir le fil de diamètre intermédiaire uniquement d'une couche de zinc. En outre, le fil pourrait être recouvert d'une couche métallique autre que du laiton ou du zinc, ayant par exemple pour fonction d'améliorer la résistance à la corrosion du fil et/ou leur adhésion à la gomme, par exemple une fine couche de Co, Ni, Al, d'un alliage de deux ou plus des composés Cu, Zn, Al, Ni, Co, Sn.

## Revendications

1. Fil (F1 ; F2 ; F3 ; F4) d'acier, l'acier étant tel que défini dans la norme NF EN10020, de diamètre d exprimé en mm présentant une microstructure intégralement ferritique, perlitique ou ferrito-perlitique, **caractérisé en ce que** le fil (F1 ; F2 ; F3 ; F4) présente un taux de carbone en masse C tel que 0,05 % ≤ C < 0,4 %, un taux de chrome en masse Cr tel que Cr < 12 % et une contrainte maximale avant rupture R, exprimée en MPa, telle que R ≥ 175 + 930.C - 600.ln(d) et R ≥ 1500 MPa.

2. Fil (F1 ; F2 ; F3 ; F4) selon la revendication 1, présentant un taux de carbone en masse C tel que 0,07 % ≤ C ≤ 0,3 %, de préférence 0,1 % ≤ C ≤ 0,3 % et plus préférentiellement 0,15 % ≤ C ≤ 0,25 %.

3. Fil (F1 ; F2 ; F3 ; F4) selon l'une quelconque des revendications précédentes, dans lequel R ≥ 350 + 930.C - 600.ln(d), de préférence R ≥ 500 + 930.C - 600.ln(d), plus préférentiellement R ≥ 700 + 930.C - 600.ln(d).

4. Fil (F1 ; F2 ; F3 ; F4) selon l'une quelconque des revendications précédentes, dans lequel d est supérieur ou égal à 0,10 mm et de préférence à 0,12 mm.

5. Fil (F1 ; F2 ; F3 ; F4) selon l'une quelconque des revendications précédentes, dans lequel d est inférieur ou égal à 0,40 mm, de préférence à 0,25 mm, plus préférentiellement à 0,23 mm et encore plus préférentiellement à 0,20 mm.

6. Fil (F1 ; F2 ; F3 ; F4) selon la revendication précédente, dans lequel d > 0,15 mm et R ≥ 1800 MPa et de préférence d > 0,15 mm et R ≥ 1900 MPa.

7. Fil (F1 ; F2 ; F3 ; F4) selon l'une quelconque des revendications précédentes, dans lequel d est inférieur ou égal à 0,40 mm, de préférence à 0,25 mm, plus préférentiellement à 0,23 mm et encore plus préférentiellement à 0,20 mm.

8. Fil (F1 ; F2 ; F3 ; F4) selon la revendication précédente, dans lequel d ≤ 0,15 mm et R ≥ 2000 MPa et de préférence d ≤ 0,15 mm et R ≥ 2100 MPa.

9. Câble (C1 ; C2), **caractérisé en ce qu'il** comprend plusieurs fils (F1 ; F2 ; F3 ; F4) selon l'une quelconque des revendications précédentes.

10. Elément semi-fini (14, 22), **caractérisé en ce qu'il** comprend une matrice en caoutchouc dans lequel est noyé au moins un fil (F1 ; F2 ; F3 ; F4) selon l'une quelconque des revendications 1 à 8.

11. Pneumatique (10), **caractérisé en ce qu'il** comprend au moins un fil (F1 ; F2 ; F3 ; F4) selon l'une quelconque des revendications 1 à 8.

## Patentansprüche

1. Stahldraht (F1; F2; F3; F4), wobei der Stahl wie in der Norm NF EN10020 definiert ist, mit einem Durchmesser d, ausgedrückt in mm, mit einer integral ferritischen, perlitischen oder ferritoperlitischen Mikrostruktur,
**dadurch gekennzeichnet, dass** der Draht (F1; F2; F3; F4) einen Kohlenstoffmassegehalt C von 0,05 % ≤ C < 0,4 %, einen Chrommassegehalt Cr von Cr < 12 % und eine maximale Dehnung vor Bruch R, ausgedrückt in MPa, von R ≥ 175 + 930.C-600.In(d) und R ≥ 1500 MPa aufweist.

2. Draht (F1; F2; F3; F4) nach Anspruch 1,
mit einem Kohlenstoffmassegehalt C von 0,07 % ≤ C ≤ 0,3 %, vorzugsweise 0,1 % ≤ C ≤ 0,3 % und bevorzugter 0,15 % ≤ C ≤ 0,25 %.

3. Draht (F1; F2; F3; F4) nach einem der vorhergehenden Ansprüche,
wobei R ≥ 350 + 930.C - 600.In(d), vorzugsweise R ≥ 500 + 930.C - 600.In(d), bevorzugter R ≥ 700 + 930.C - 600.In(d).

4. Draht (F1; F2; F3; F4) nach einem der vorhergehenden Ansprüche,
wobei d größer oder gleich 0,10 mm und vorzugsweise 0,12 mm ist.

5. Draht (F1; F2; F3; F4) nach einem der vorhergehenden Ansprüche,
wobei d kleiner oder gleich 0,40 mm, vorzugsweise 0,25 mm, bevorzugter 0,23 mm und noch bevorzugter 0,20 mm ist.

6. Draht (F1; F2; F3; F4) nach dem vorhergehenden Anspruch,
wobei d > 0,15 mm und R ≥ 1800 MPa und vorzugsweise d > 0,15 mm und R ≥ 1900 MPa.

7. Draht (F1; F2; F3; F4) nach einem der vorhergehenden Ansprüche,
wobei d kleiner oder gleich 0,40 mm, vorzugsweise 0,25 mm, bevorzugter 0,23 mm und noch bevorzugter 0,20 mm ist.

8. Draht (F1; F2; F3; F4) nach dem vorhergehenden Anspruch,
wobei d ≤ 0,15 mm und R ≥ 2000 MPa und vorzugsweise d ≤ 0,15 mm und R ≥ 2100 MPa.

9. Kabel (C1; C2),
**dadurch gekennzeichnet, dass** dieses mehrere Drähte (F1; F2; F3; F4) nach einem der vorhergehenden Ansprüche umfasst.

10. Halbfertiges Element (14, 22),
**dadurch gekennzeichnet, dass** dieses eine Matrix aus Kautschuk umfasst, in dem mindestens ein Draht (F1; F2; F3; F4) nach einem der Ansprüche 1 bis 8 eingebettet ist.

11. Luftreifen (10),
**dadurch gekennzeichnet, dass** dieser mindestens einen Draht (F1; F2; F3; F4) nach einem der Ansprüche 1 bis 8 umfasst.

## Claims

1. Steel wire (F1 ; F2; F3; F4), the steel being as defined in the standard NF EN10020, of diameter d expressed in mm and having a completely ferritic, pearlitic or ferritic-pearlitic microstructure, **characterized in that** the wire (F1 ; F2; F3; F4) has a weight content of carbon C such that 0.05 % ≤ C < 0.4%, a weight content of chromium Cr such that Cr < 12% and a maximum tensile strength R, expressed in MPa, such that R ≥ 175 + 930.C - 600.ln(d) and R ≥ 1500 MPa.

2. Wire (F1 ; F2; F3; F4) according to Claim 1, having a weight content of carbon C such that 0.07% ≤ C ≤ 0.3%, preferably 0.1% ≤ C ≤ 0.3%, and more preferably 0.15% ≤ C ≤ 0.25%.

3. Wire (F1 ; F2 ; F3 ; F4) according to either one of the preceding claims, in which R ≥ 350 + 930.C - 600.ln(d), preferably R ≥ 500 + 930.C - 600.ln(d), more preferably R ≥ 700 + 930.C - 600.ln(d).

4. Wire (F1 ; F2; F3; F4) according to any one of the preceding claims, in which d is greater than or equal to 0.10 mm and preferably greater than or equal to 0.12 mm.

5. Wire (F1 ; F2; F3; F4) according to any one of the preceding claims, in which d is less than or equal to 0.40 mm, preferably less than or equal to 0.25 mm, more preferably less than or equal to 0.23 mm and more preferably still less than or equal to 0.20 mm.

6. Wire (F1 ; F2 ; F3 ; F4) according to the preceding claim, in which d > 0.15 mm and R ≥ 1800 MPa and preferably d > 0.15 mm and R ≥ 1900 MPa.

7. Wire (F1 ; F2 ; F3 ; F4) according to any one of the preceding claims, in which d is less than or equal to 0.40 mm, preferably less than or equal to 0.25 mm, more preferably less than or equal to 0.23 mm and more preferably still less than or equal to 0.20 mm.

8. Wire (F1 ; F2 ; F3 ; F4) according to the preceding claim, in which d ≤ 0.15 mm and R ≥ 2000 MPa and preferably d ≤ 0.15 mm and R ≥ 2100 MPa.

9. Cord (C1 ; C2), **characterized in that** it comprises several wires (F1 ; F2 ; F3 ; F4) according to any one of the preceding claims.

10. Semi-finished element (14, 22), **characterized in that** it comprises a rubber matrix in which at least one wire (F1 ; F2; F3; F4) according to any one of Claims 1 to 8 is embedded.

11. Tyre (10), **characterized in that** it comprises at least one wire (F1 ; F2; F3; F4) according to any one of Claims 1 to 8.
